# EUROPEAN PATENT SPECIFICATION

(11) **EP 3 467 004 B1**
(45) Date of publication and mention of the grant of the patent: **14.12.2022**
(21) Application number: 17806773.2
(22) Date of filing: 31.05.2017
(51) Int. Cl.: C08G 63/82, B65D 1/00, B65D 1/02, C08G 63/183, C08G 63/84, C08G 63/85, C08G 63/86

(54) **METHOD FOR PRODUCING BIO-PET RESIN**
VERFAHREN ZUR HERSTELLUNG VON BIO-PET-HARZ
PROCÉDÉ DE PRODUCTION DE RÉSINE DE PET BIO

(30) Priority: 31.05.2016 JP 2016109510
(43) Date of publication of application: 10.04.2019
(73) Proprietor: Suntory Holdings Limited, Osaka-shi, Osaka 530-8203 (JP)
(72) Inventor: AKANUMA, Yasuhiko, Tokyo 135-8631 (JP); SUZUKI, Hideyuki, Tokyo 135-8631 (JP); KISHI, Shigenobu, Tokyo 135-8631 (JP)
(74) Representative: Vossius & Partner Patentanwälte Rechtsanwälte mbB
(86) International application number: PCT/JP2017/020371
(87) International publication number: WO 2017/209223

(56) References cited:
- WO-A1-2013/035559
- JP-A- 2011 219 736
- JP-A- 2011 219 736
- JP-A- 2013 011 029
- JP-A- 2014 001 257
- JP-A- 2014 193 985
- US-A1- 2014 197 580

## Description

### FIELD

The present invention relates to a method for producing a Bio-PET bottle that comprises processing a polyethylene terephthalate resin derived from a biomass resource using an aluminum compound or germanium compound as the catalyst.

### BACKGROUND

Polyethylene terephthalate (PET) resins are crystalline resins composed mainly of ethylene glycol and terephthalic acid and obtained by their polycondensation, and because of their excellent molding workability, heat resistance, chemical resistance, transparency, mechanical strength and gas barrier properties, they are used in large quantities as materials for containers for beverages, foods, cosmetics, drugs, detergents and the like (and especially soft drink PET bottles); however, they are largely derived from petroleum resources. In recent years, in consideration of environmental problems such as global warming caused by carbon dioxide emissions, and depletion of petroleum resources, restrictions on industrial activities relating to the environment have become more stringent, and world demand is increasing for PET resins derived from carbon-neutral biomass resources (hereunder referred to as "Bio-PET resins") instead of petroleum resources.

There have already been reported a method for producing polyterephthalic acid/multicomponent glycol copolymerized polyester fibers using ethylene glycol derived from corn (PTL 1). However, biomass resources contain trace impurities from organisms, such as proteins, metal cations and the like, while their poor polymerization reactivity and transparency have made it difficult to prepare PET resin products, and no successful examples of producing Bio-PET resins from substantially 100% biomass resources are known. In actuality, the Bio-PET resins currently available on the market are limited to those in which approximately 30 wt% ethylene glycol as the main component is produced from a starting material derived from sugarcane (known as "Bio-PET resin 30"), and there is a demand for development of Bio-PET resins with a further increased proportion of starting materials derived from biomass resources.

PTL 2 discloses a method for producing a PET product that comprises a step of forming either or both the ethylene glycol and/or terephthalic acid component from a bio-based material.

However, absolutely nothing is mentioned in the cited document regarding the problems of polymerization reactivity or transparency, or how to solve such problems, for production of PET resins derived from biomass resources. Even if the PET product disclosed in the cited document is produced using starting materials derived from biomass resources for both the ethylene glycol and terephthalic acid, since isophthalic acid, cyclohexanedimethanol, diethylene glycol, or the like is usually also used as a copolymerizing component in addition to the main components of monoethylene glycol or terephthalic acid in order to impart heat-resistant properties to PET products such as PET bottles for aseptic packing, it cannot be said that the Bio-PET resin is derived from substantially 100% biomass resources. For example, the isophthalic acid, cyclohexanedimethanol, diethylene glycol, or the like in a PET resin is only a few wt% (about 0.1 to 3 wt%), but considering the massive amounts of PET resins consumed throughout the world, even trace components in PET resins cannot be ignored. A possible solution is to produce the copolymerizing components, such as isophthalic acid, from starting materials derived from biomass resources, but this leads to extremely high production costs and is not practical.

### CITATION LIST

### PATENT LITERATURE

[PTL 1] Chinese Patent Application Publication No. 101046007
[PTL 2] Japanese Patent Publication No. 5784510
[PTL 3] Japanese Unexamined Patent Publication (Kokai) No. 2002-249466
[PTL 4] Japanese Unexamined Patent Publication (Kokai) No. 2004-323676
[PTL 5] Japanese Unexamined Patent Publication (Kokai) No. 2006-52393
[PTL 6] Japanese Unexamined Patent Publication (Kokai) No. 2007-2239
[PTL 7] Japanese Unexamined Patent Publication (Kokai) No. 2008-266359
[PTL 8] Japanese Unexamined Patent Publication (Kokai) No. 2008-266360
[PTL 9] Japanese Unexamined Patent Publication (Kokai) No. 2010-235941

### DISCLOSURE OF THE INVENTION

### PROBLEMS TO BE SOLVED BY THE INVENTION

It is an object of the invention to provide a method for producing a Bio-PET bottle, comprising processing Bio-PET resins derived
from substantially 100% biomass resources, comprising using, as maximally as possible, starting materials derived from carbon neutral biomass resources instead of starting materials derived from petroleum resources.

### MEANS FOR SOLVING THE PROBLEMS

As a result of diligent research and much experimentation aimed at solving the problem described above, the present inventors have accomplished this invention upon gaining the surprising knowledge that by using an aluminum compound or a germanium compound as a catalyst in the polymerization step between ethylene glycol derived from a biomass resource and terephthalic acid derived from a biomass resource, it is possible to produce a Bio-PET resin that can withstand use as a PET product (especially a PET bottle), without adding isophthalic acid, cyclohexanedimethanol, diethylene glycol, or the like as a copolymerizing component.

The present invention is as defined in the appended claims.

### EFFECT OF THE INVENTION

According to the invention there is provided a method for producing a Bio-PET bottle, comprising processing a PET resin using, as maximally as possible,
starting materials derived from carbon-neutral biomass resources instead of starting materials derived from petroleum resources. Since the Bio-PET resin used in the invention has properties equivalent to conventional PET resins derived from petroleum resources, it can be worked into a PET product such as a PET bottle using existing equipment, and it can be introduced into recycling treatment together with conventional PET resins.

### BRIEF DESCRIPTION OF DRAWINGS

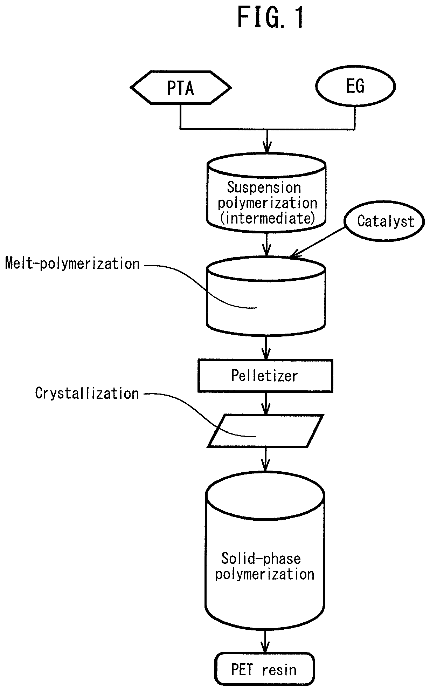

FIG. 1 shows a typical production scheme for a Bio-PET resin of the invention.

### DESCRIPTION OF THE EMBODIMENTS

A biomass resource is generally defined as a renewable, organism-derived organic resource, excluding petroleum resources. Since a biomass resource is an organic material its combustion discharges carbon dioxide, but the carbon contained within it is derived from the carbon dioxide absorbed from the atmosphere by photosynthesis and the like during the course of growth of the organism that is the biomass resource, and therefore even if a biomass resource is utilized, it is considered to be "carbon-neutral", i.e. not increasing the amount of carbon dioxide in the atmosphere in an overall sense. Based on this viewpoint, it does not constitute a cause of global warming since it does not increase the overall carbon dioxide concentration in the atmosphere. Furthermore, with appropriate management, biomass resources can be utilized without depletion, unlike fossil resources such as petroleum.

The biomass resource is not particularly restricted so long as it can yield ethylene glycol and/or terephthalic acid, and it may be a waste biomass resource (e.g., paper, livestock feces or urine, food scrap material, construction scrap material, black liquor, sewer water sludge or food waste), or an unused biomass resource (e.g., rice straw, wheat straw, rice hull, forest land remainders, resource crops, feed crops or starch-based crops). Specifically, there may be mentioned natural fiber products and their waste products (including surplus unused products), examples of which include saccharide materials (sugarcane, molasses, beet and the like), starchy materials (corn, sorghum, potato, sweet potato, barley, cassava and the like), and other cellulosic plant-derived materials (pulp spent liquor, bagasse, scrap wood, wood chips, husk, rice straw, fruit fiber, fruit kernel shells and empty fruit bunches), as well as natural fiber products or its wastes (including unused products, such as excess stock products) exemplified as sundry goods or daily commodities that include cotton and hemp (such as towels, handkerchiefs, clothing, stuffed dolls and curtains).

The ethylene glycol derived from a biomass resource and the terephthalic acid derived from a biomass resource, which are to serve as starting materials for the Bio-PET resin, can be produced by known methods such as catalytic rapid thermal decomposition, liquid phase reforming, catalyst-based chemical conversion, acid hydrolysis, enzymatic hydrolysis, microbial decomposition, fermentative conversion, bacterial decomposition or hydrotreatment. For example, ethylene glycol derived from a biomass resource can be obtained, for example, by fermenting a biomass resource to extract bioethanol, converting the obtained bioethanol to ethylene, and further converting it to ethylene glycol via ethylene oxide. Terephthalic acid derived from a biomass resource can be obtained, for example, by catalytic rapid thermal decomposition of the biomass to produce xylene, followed by separation and purification and isomerization treatment to form para-xylene, and liquid phase oxidation reaction of the para-xylene.

The ethylene glycol derived from the biomass resource and the terephthalic acid derived from the biomass resource are polymerized in the presence of a catalyst comprising an aluminum compound or a germanium compound, to produce a Bio-PET resin.

In the conventional methods for producing PET resins, the catalyst used is an antimony compound such as antimony trioxide, which is inexpensive and has excellent catalytic activity, or a titanium compound that has excellent safety and reactivity. When antimony compounds or titanium compounds are used, however, they must be added in large amounts during the polymerization, and therefore their residual contents in the PET resin increase and the crystallization rates are higher. As a result, the transparency is impaired and the physical properties for use as bottles (e.g., heat resistance and pressure resistance) are no longer suitable. It therefore becomes necessary to add a copolymerizing component, such as isophthalic acid, cyclohexanedimethanol, or diethylene glycol, as a component that inhibits excess crystallization, in addition to the major polymerizing components of monoethylene glycol and terephthalic acid. While the copolymerizing component, such as isophthalic acid, cyclohexanedimethanol, or diethylene glycol, in a PET resin is present at a few wt% (about 0.1 to 3 wt%), considering the massive amounts of PET resins that are consumed throughout the world, it would clearly be a major contribution toward improving the earth environment if it were possible to avoid the use of starting materials derived from petroleum resources even for such trace components. Here, the present inventors have gained the surprising knowledge that the addition of a copolymerizing component, such as isophthalic acid, cyclohexanedimethanol, or diethylene glycol, in the production of Bio-PET resins can be avoided by using an aluminum compound or germanium compound as the catalyst, such catalysts having relatively high catalytic activity. Conventionally, in the production of PET resins using starting materials derived from petroleum resources, the use of aluminum compounds and germanium compounds as polyester polymerization catalysts has been known (PTLs 3 to 9). However, the production of a Bio-PET resin substantially 100% derived from a biomass resource by the use of such a catalyst to avoid the addition of a copolymerizing component, such as isophthalic acid, cyclohexanedimethanol, or diethylene glycol, has not been attempted. Furthermore, it was demonstrated that when an aluminum compound or germanium compound is used as the catalyst, the transparency or intrinsic viscosity (IV) retention of the PET resin is increased, compared to those when another catalyst such as an antimony compound or titanium compound is used. Such properties are also advantageous for processing or recycling into PET products.

Examples of aluminum compounds to be used for the invention include organic aluminum compounds such as aluminum acetate, aluminum lactate, aluminum chloride, aluminum hydroxide, aluminum hydroxychloride, aluminum acetylacetonate, acetylacetone aluminum, aluminum oxalate, aluminum oxide, or alkylaluminum, and partial hydrolysates of the foregoing, with no limitation to these. The aluminum compound may be used in an amount such that the content as aluminum atoms in the resin is typically about 1 to about 50 ppm, preferably about 3 to about 40 ppm, and most optimally about 10 to about 20 ppm.

The germanium compound to be used for the invention may be a compound such as germanium tetroxide, germanium tetraethoxide, germanium tetra-n-butoxide, crystalline germanium dioxide, amorphous germanium dioxide, germanium hydroxide, germanium oxalate, germanium chloride or germanium phosphite, with no limitation to these. The germanium compound may be used in an amount such that the content as germanium atoms in the resin is typically about 1 ppm to 100 ppm.

The polymerization step for the Bio-PET resin may be any of publicly known steps, but comprises, as shown in Fig. 1 for example, suspension polymerization of ethylene glycol (liquid) derived from a biomass resource and terephthalic acid (powder) derived from a biomass resource, to obtain bis(β-hydroxyethyl)terephthalate (BHET) and/or oligomer thereof as an intermediate, followed by dehydrating reaction in a high vacuum at about 270 to 300°C in the presence of a catalyst comprising an aluminum compound or a germanium compound, for melt-polycondensation of the obtained BHET. The catalyst comprising an aluminum compound or a germanium compound may be added into a reaction system at any stage of the polymerization reaction. Such a catalyst may be added into the reaction system at any stage, for example, before the start of esterification or transesterification or at any stage during the reaction, or immediately before the start of polycondensation or at any stage during the polycondensation. However, the catalyst is preferably added immediately before the start of polycondensation. The method for adding the catalyst is not particularly limited. The catalyst may be added in the form of a powder or a neat or in the form of a slurry or a solution of a solvent such as ethylene glycol derived from a biomass resource. The melt polycondensation may be carried out in a batch reactor or a continuous reactor. The melt polycondensation may be carried out in one stage or in multiple stages.

A phosphorus compound may also be added as a stabilizer to prevent yellowing. Examples of the phosphorus compound include phosphoric acid, phosphoric acid esters, phosphonic acid-type compounds, phosphinic acid-type compounds, phosphine oxide-type compounds, phosphonous acid-type compounds, hypophosphinic acid-type compounds, and phosphine-type compounds. The phosphorus compound and the above catalyst may be added at the same time or separately.

The Bio-PET resin obtained by the melt-polycondensation may be extruded and processed into pellets with a pelletizer to obtain transparent pellets.

In cases where a low acetaldehyde content or low cyclic trimer content is required, such as for beverage bottle uses, and especially heat-proof blow molded containers for low flavor beverages or mineral water, the polyester obtained by melt polycondensation in this manner is subjected to solid-phase polymerization. Like the melt polycondensation, solid-phase polymerization may be carried out in a batch device or a continuous device. The solid-phase polymerization step and the melt polycondensation step may be operated continuously or dividedly. Pellets are heated for a prescribed time period at a temperature of 100 to 210°C, in an inert gas or under reduced pressure, or in water vapor or a water vapor-containing inert gas atmosphere, for pre-crystallization (white pellets: in order to prevent fusion between the pellets during solid-phase polymerization). Solid-phase polymerization is then conducted for a prescribed time period at a temperature of 190 to 230°C, under an inert gas atmosphere or under reduced pressure.

Conducting solid-phase polymerization can cause polymerization between the PET resin molecules and increase the strength of it. Conducting solid-phase polymerization can also reduce impurities such as acetaldehyde or cyclic oligomers present in the resin starting materials.

It is thus possible to obtain a Bio-PET resin derived from substantially 100% biomass resources by avoiding the addition of a copolymerizing component, such as isophthalic acid, cyclohexanedimethanol, or diethylene glycol. The phrase "derived from substantially 100% biomass resources" means that more than 97 wt%, preferably more than 98wt%, more preferably more than 99 wt%, and optimally 99.9 wt% of the components of the obtained Bio-PET resin are derived from biomass resources. Moreover, the obtained Bio-PET resin has excellent transparency and intrinsic viscosity (IV) retention, and is highly useful as a material for a PET product such as a PET bottle.

By processing the Bio-PET resin into a PET product by a known method it is possible to produce a PET product with high added value. Such PET products include, but are not limited to. containers for beverages, foods, cosmetics, drugs, detergents and the like (and especially soft drink PET bottles), as well as photographic films, cassette tapes, and clothing fibers such as fleece. Examples of PET bottles for soft drinks include heat-resistant PET bottles, aseptic packaging PET bottles, pressure-resistant PET bottles and heat-resistant/pressure-resistant PET bottles.

## Claims

1. A method for producing a Bio-PET bottle, comprising the steps of:
polymerizing ethylene glycol derived from a biomass resource with terephthalic acid derived from a biomass resource to provide a Bio-PET resin, in the presence of a catalyst comprising an aluminum compound or a germanium compound; and
processing the Bio-PET resin into the Bio-PET bottle, wherein a copolymerizing component is not added, and wherein the copolymerizing component is isophthalic acid, cyclohexanedimethanol, or diethylene glycol.

2. The method according to claim 1, wherein the aluminum compound is an organic aluminum compound selected from aluminum acetate, aluminum lactate, aluminum chloride, aluminum hydroxide, aluminum hydroxychloride, aluminum acetylacetonate, acetylacetone aluminum, aluminum oxalate, aluminum oxide or alkylaluminum, or partial hydrolysates of the organic aluminum compound, or any combinations thereof.

3. The method according to claim 1, wherein the germanium compound is germanium tetroxide, germanium tetraethoxide, germanium tetra-n-butoxide, crystalline germanium dioxide, amorphous germanium dioxide, germanium hydroxide, germanium oxalate, germanium chloride or germanium phosphite, or any combinations thereof.

4. The method according to any one of claims 1 to 3, wherein the biomass resource is a saccharide material selected from sugarcane, molasses or beet, a starchy material selected from corn, sorghum, potato, sweet potato, barley and cassava, a cellulosic plant-derived material selected from pulp spent liquor, bagasse, scrap wood, wood chips, husks, rice straw, fruit fiber, fruit kernel shells or empty fruit bunches, a natural fiber product or its waste product, or any combination thereof.

5. The method according to any one of claims 1 to 4, wherein the step of polymerizing the ethylene glycol derived from a biomass resource and the terephthalic acid derived from a biomass resource comprises producing bis(β-hydroxyethyl)terephthalate (BHET) and/or oligomer thereof as an intermediate by suspension polymerization of the ethylene glycol derived from a biomass resource and the terephthalic acid derived from a biomass resource to, and melt-polycondensing the obtained BHET and/or oligomer thereof in the presence of the catalyst.

6. The method according to claim 5, further comprising processing the Bio-PET resin obtained by the melt-polycondensation into pellets and subjecting them to solid phase polymerization.

7. The method according to any one of claims 1 to 6, wherein the intrinsic viscosity (IV) of the Bio-PET resin is 0.7 to 0.85 dl/g.

8. The method according to any one of claims 1 to 7, wherein more than 97 wt% of the components of the Bio-PET resin are derived from a biomass resource.

9. The method according to claim 8, wherein more than 99 wt% of the components of the Bio-PET resin are derived from a biomass resource.

10. The method according to claim 9, wherein more than 99.9 wt% of the components of the Bio-PET resin are derived from a biomass resource.

## Patentansprüche

1. Ein Verfahren zur Herstellung einer Bio-PET-Flasche, umfassend die Schritte:
Polymerisieren von aus einer Biomassequelle abgeleitetem Ethylenglycol mit aus einer Biomassequelle abgeleiteter Terephthalsäure, um ein Bio-PET-Harz bereitzustellen, in Gegenwart eines Katalysators, der eine Aluminiumverbindung oder eine Germaniumverbindung umfasst; und
Verarbeiten des Bio-PET-Harzes zu der Bio-PET-Flasche, wobei kein Copolymerisationsbestandteil zugegeben wird und wobei der Copolymerisationsbestandteil Isophthalsäure, Cyclohexandimethanol oder Diethylenglycol ist.

2. Das Verfahren nach Anspruch 1, wobei die Aluminiumverbindung eine organische Aluminiumverbindung, ausgewählt aus Aluminiumacetat, Aluminiumlactat, Aluminiumchlorid, Aluminiumhydroxid, Aluminiumhydroxychlorid, Aluminiumacetylacetonat, Acetylacetonaluminium, Aluminiumoxalat, Aluminiumoxid oder Alkylaluminium, oder Teilhydrolysaten der organischen Aluminiumverbindung oder Kombinationen davon, ist.

3. Das Verfahren nach Anspruch 1, wobei die Germaniumverbindung Germaniumtetroxid, Germaniumtetraethoxid, Germaniumtetra-n-butoxid, kristallines Germaniumdioxid, amorphes Germaniumdioxid, Germaniumhydroxid, Germaniumoxalat, Germaniumchlorid oder Germaniumphosphit oder Kombinationen davon ist.

4. Das Verfahren nach einem der Ansprüche 1 bis 3, wobei die Biomassequelle ein Saccharidmaterial, ausgewählt aus Zuckerrohr, Melassen oder Zuckerrübe, ein Stärkematerial, ausgewählt aus Mais, Hirse, Kartoffel, Süßkartoffel, Gerste und Maniok, ein von einer cellulosehaltigen Pflanze abgeleitetes Material, ausgewählt aus Zellstoffablauge, Bagasse, Altholz, Holzspänen, Hülsen, Reisstroh, Fruchtfaser, Fruchtkernschalen oder leeren Fruchtbündeln, ein Naturfaserprodukt oder dessen Abfallprodukt oder eine Kombination davon ist.

5. Das Verfahren nach einem der Ansprüche 1 bis 4, wobei der Schritt des Polymerisierens des von einer Biomassequelle abgeleiteten Ethylenglycols und der von einer Biomassequelle abgeleiteten Terephthalsäure Herstellen von Bis(β-hydroxyethyl)terephthalat (BHET) und/oder eines Oligomers davon als ein Zwischenprodukt durch Suspensionspolymerisation des von einer Biomassequelle abgeleiteten Ethylenglycols und der von einer Biomassequelle abgeleiteten Terephthalsäure und Schmelzpolykondensieren des erhaltenen BHET und/oder des Oligomers davon in Gegenwart des Katalysators umfasst.

6. Das Verfahren nach Anspruch 5, weiter umfassend Verarbeiten des durch die Schmelzpolykondensation erhaltenen Bio-PET-Harzes zu Pellets und Unterziehen derselben einer Festphasenpolymerisation.

7. Das Verfahren nach einem der Ansprüche 1 bis 6, wobei die Grenzviskosität (IV) des Bio-PET-Harzes 0,7 bis 0,85 dl/g beträgt.

8. Das Verfahren nach einem der Ansprüche 1 bis 7, wobei mehr als 97 Gew.-% der Bestandteile des Bio-PET-Harzes von einer Biomassequelle abgeleitet sind.

9. Das Verfahren nach Anspruch 8, wobei mehr als 99 Gew.-% der Bestandteile des Bio-PET-Harzes von einer Biomassequelle abgeleitet sind.

10. Das Verfahren nach Anspruch 9, wobei mehr als 99,9 Gew.-% der Bestandteile des Bio-PET-Harzes von einer Biomassequelle abgeleitet sind.

## Revendications

1. Un procédé de fabrication d'une bouteille en Bio-PET, comprenant les étapes de:
polymérisation d'éthylène glycol dérivant d'une ressource de biomasse avec de l'acide téréphtalique dérivant d'une ressource de biomasse pour fournir une résine de Bio-PET, en présence d'un catalyseur comprenant un composé d'aluminium ou un composé de germanium ; et la transformation, sans addition de composé de copolymérisation, de la résine de Bio-PET en bouteilles en Bio-PET, le composant de copolymérisation étant l'acide isophtalique, le cyclohexanediméthanol ou le diéthylène glycol.

2. Le procédé selon la revendication 1, dans lequel le composé d'aluminium est un composé organique d'aluminium choisi parmi l'acétate d'aluminium, le lactate d'aluminium, le chlorure d'aluminium, l'hydroxyde d'aluminium, l'hydroxychlorure d'aluminium, l'acétylacétonate d'aluminium, l'acétylacétone d'aluminium, l'oxalate d'aluminium, l'oxyde d'aluminium ou l'alkylaluminium, ou des hydrolysats partiels du composé organique d'aluminium, ou toute combinaison en dérivant.

3. Le procédé selon la revendication 1, dans lequel le composé de germanium est le tétroxyde de germanium, le tétraéthoxyde de germanium, le tétra-n-butoxyde de germanium, le dioxyde de germanium cristallin, le dioxyde de germanium amorphe, l'hydroxyde de germanium, l'oxalate de germanium, le chlorure de germanium ou le phosphite de germanium, ou toute combinaison en dérivant.

4. Le procédé selon l'une quelconque des revendications 1 à 3, dans lequel la ressource de biomasse est une matière saccharidique choisie parmi la canne à sucre, la mélasse ou la betterave, une matière amylacée choisie parmi le maïs, le sorgho, la pomme de terre, la patate douce, l'orge et le manioc, une matière cellulosique d'origine végétale choisie parmi la liqueur usée de pâte, la bagasse, les déchets de bois, les copeaux de bois, les coques, la paille de riz, les fibres de fruits, les coques de noyaux de fruits ou les grappes vides des fruits, un produit à base de fibres naturelles ou ses déchets, ou toute combinaison de ceux-ci.

5. Le procédé selon l'une quelconque des revendications 1 à 4, dans lequel l'étape de polymérisation de l'éthylène glycol dérivant d'une ressource de biomasse et de l'acide téréphtalique dérivant d'une ressource de biomasse, comprend la production de bis(β-hydroxyéthyl)téréphtalate (BHET) et/ ou d'oligomère en dérivant, en tant qu'intermédiaire par polymérisation en suspension de l'éthylène glycol dérivant d'une ressource de biomasse et de l'acide téréphtalique dérivant d'une ressource de biomasse, et polycondensation à l'état fondu du BHET obtenu et/ou d'un oligomère en dérivant, en présence du catalyseur.

6. Le procédé selon la revendication 5, comprenant en outre le traitement de la résine de Bio-PET obtenue par la polycondensation à l'état fondu en pastilles et leur soumission à une polymérisation en phase solide.

7. Le procédé selon l'une quelconque des revendications 1 à 6, dans lequel la viscosité intrinsèque (VI) de la résine de Bio-PET est de 0,7 à 0,85 dl/g.

8. Le procédé selon l'une quelconque des revendications 1 à 7, dans lequel plus de 97 % en poids des composants de la résine de Bio-PET sont dérivés d'une ressource de biomasse.

9. Le procédé selon la revendication 8, dans lequel plus de 99 % en poids des composants de la résine de Bio-PET dérivent d'une ressource de biomasse.

10. Le procédé selon la revendication 9, dans lequel plus de 99,9 % en poids des composants de la résine de Bio-PET dérivent d'une ressource de biomasse.
